# EUROPEAN PATENT SPECIFICATION

(11) **EP 2 921 689 B1**
(45) Date of publication and mention of the grant of the patent: **11.05.2022**
(21) Application number: 14190123.1
(22) Date of filing: 23.10.2014
(51) Int. Cl.: F02M 35/16, B62K 11/04, F02M 61/14, F02M 35/10

(54) **Saddle-riding or straddle-type vehicle**
Sattel- oder Grätschsitzfahrzeug
Véhicule de type à califourchon ou à selle

(30) Priority: 19.03.2014 JP 2014056932
(43) Date of publication of application: 23.09.2015
(73) Proprietor: Yamaha Hatsudoki Kabushiki Kaisha, Shizuoka-ken Shizuoka 438-8501 (JP)
(72) Inventor: Ozawa, Masakazu, Shizuoka, 438-8501 (JP)
(74) Representative: Moreland, David

(56) References cited:
- EP-A2- 0 223 378
- GB-A- 2 079 367
- JP-A- 2009 162 065
- US-A1- 2003 140 882
- US-B1- 6 467 820
- Okp Gmbh: "OKP Parts and Engineering GmbH", , 27 September 2010 (2010-09-27), XP055253921, Retrieved from the Internet: URL:http://www.okp.de/xtc2/105/115-Bertone /10-Motorteile/Vergaser/Vergaser-Gummiansa ugflansch-40mm-105-A-GL::20057.html?langua ge=de [retrieved on 2016-02-29]

## Description

### FIELD OF INVENTION

The present invention relates to a saddle-riding or straddle-type vehicle.

### BACKGROUND TO INVENTION

The intake system of a saddle-riding or straddle-type vehicle is constructed so that, after external air has been sucked into an air cleaner, this air flows into a cylinder via a throttle body. The throttle body and the cylinder are connected together via a pipe member. The shape of the pipe member and the method for connecting it differ according to the type of vehicle, as described below.

With the so-called underbone type vehicle disclosed in Japanese Laid-Open Patent Publication 2009-162065, for example, in order to make it simple and easy to mount and dismount, the main frame is extended rearward and moreover downward from the head pipe, so that a space is created forward of the seat for mounting and dismounting. The engine is mounted in a narrow space below the main frame. For this, the engine is built so that its dimension in the vertical direction is kept small. In particular, the axial line of the cylinder is oriented in the front-back direction, and the cylinder is connected to the front end portion of the crank case. In a side view of the vehicle, the throttle body is disposed between the engine and the main frame. A pipe member connects together the throttle body and the cylinder. The connection portion between the throttle body and the pipe member is positioned more forward than the central axis of the connection portion between the cylinder and the pipe member. Due to this, the connection portion between the throttle body and the pipe member faces rearward and downward. Moreover, the connection portion between the cylinder and the pipe member faces upward.

Due to the provision of this type of configuration, the pipe member is bent from it's end portion on the throttle body side toward its end portion on the cylinder side. A flange of the pipe member that is formed on it's end portion on the cylinder side is tilted with respect to a flange that is formed on its end portion on the throttle body side. With this type of structure, the flange on the throttle body side is connected to a connection portion of the throttle body by bolts. Moreover, the flange on the cylinder side is connected to a connection portion of the cylinder by bolts.

With this vehicle described in Japanese Laid-Open Patent Publication 2009-162065, a groove is formed on the flange on the throttle body side of the pipe member. This groove is employed as an auxiliary flow conduit for conducting intake air drawn from upstream of the throttle body to downstream of the throttle body.

On the other hand, with a so-called sports type vehicle as disclosed, for example, in Japanese Laid-Open Patent Publication 2010-7646, no mounting and dismounting space such as that in an underbone type vehicle is formed, but rather a fuel tank is disposed in front of the seat, and the engine is disposed underneath the fuel tank. The engine is configured so as to keep its dimension in the front-back direction small as compared to the case with an underbone type vehicle. In particular, the axial line of the cylinder is oriented in the vertical direction, and the cylinder is connected on the upper forward portion of the crank case. The throttle body is disposed behind the cylinder, and the throttle body and the cylinder are connected together by a pipe member. A flange is formed on the end portion of the pipe member on the throttle body side, with this flange being connected to a connection portion of the cylinder by bolts. On the other hand, a connection pipe made from rubber is provided on the end portion of the pipe member on the cylinder side, and, in the state in which this connection pipe is fitted over a connection portion on the throttle body, it is connected by being fixed with a band (see Figure 2 of Japanese Laid-Open Patent Publication 2010-7646).

### SUMMARY OF INVENTION

With the prior art technique, since a connection pipe made from rubber and a band are required, the number of components may become large. Moreover, it may be difficult to construct an auxiliary flow conduit, such as that described above, since the connection pipe that is made from rubber is fitted over the connection portion of the throttle body and also over the end portion of the pipe member. In view of the above problems one option would be to connect the pipe member and the throttle body with flanges in the case of a sports type vehicle as well.

However, with a sports type vehicle, the cylinder and the throttle body that are connected with the pipe member are arranged in the front-back direction. Due to this, when a flange is provided upon the end portion of the pipe member on the throttle body side (hereinafter this will be termed the "rear flange"), then the flange on its end portion on the cylinder side (hereinafter this will be termed the "front flange") and the rear flange overlap along the direction of the central axis of the pipe member, e.g. a longitudinally extending central axis of the pipe member. Due to this, the rear flange overlaps the prolongation or extrapolations of the bolts that engage the front flange (i.e. over their tool access paths), and the problem arises that the assembly becomes difficult. In particular, if an auxiliary flow conduit is formed upon the rear flange, then the problem arises that the assembly becomes yet more difficult, due to the fact that the area of the rear flange becomes large.

Furthermore, another option would be to make the front flange larger, such that the rear flange of the pipe member does not overlap the tool access paths for the engagement members. However, in this case there is the problem that the weight increases due to an increase in the size of the pipe member. Moreover, if a seal member is provided between the front flange and the cylinder, then the distance between the position of fixing by the engagement members and the seal member becomes larger due to increase in the size of the front flange. In this case, the problem arises that the sealing performance is deteriorated due to reduction of the squeezing force upon the seal member.

Thus, at least one object of at least one embodiment of the present invention is to provide a saddle-riding or straddle type vehicle with which it is possible to reduce the number of components and to construct the auxiliary flow conduit in a simple manner, and with which, along with enhancing the ease of assembly, it is also possible to suppress increases in size of the pipe member that connects together the throttle body and the engine.

It is at least one object of at least one embodiment of the present invention to obviate or mitigate at least one problem in the prior art.

The aspects of the present invention are defined in independent claim 1. Some preferred features are defined in the dependent claims.

A saddle-riding or straddle-type vehicle, e.g. a motor cycle, according to one aspect of the present invention includes an engine, a throttle body, a pipe member, and a first engagement member. The engine includes a cylinder and a crank case. The crank case is connected to the lower portion of the cylinder and extends rearward. The throttle body is disposed rearward of the cylinder and adjusts the flow rate of intake air supplied into the engine. The pipe member is connected to the cylinder and to the throttle body. The pipe member includes a front flange and a rear flange. The front flange is attached to the cylinder. The rear flange is attached to the throttle body. The first engagement member engages or fixes together the cylinder and the front flange. In a plan view of the vehicle, at least a portion of the throttle body may overlap the crank case, e.g. at least a portion of the throttle body may be provided upwardly of, or above, the crank case. The throttle body includes a connection portion that is connected to the rear flange. At least one of the connection portion of the throttle body and the rear flange may include a groove for supplying intake air. In a side view of the vehicle, the rear flange overlaps an extrapolation or prolongation of the first engagement member extending in the axial direction of the first engagement member. As seen along the axial direction of the first engagement member, the rear flange does not overlap the first engagement member. It should be understood that, herein, "in a side view of the vehicle" means that attention is focused upon the rear flange and the first engagement member, with other members being considered as being transparent.

With the saddle-riding or straddle type vehicle according to this aspect of the present invention, the throttle body is connected to the pipe member by flange connection. Due to this, along with it being possible to reduce the number of components, it may also be possible to make the structure of the auxiliary flow conduit simple and easy. Moreover, as seen along the axial direction of the first engagement member, the rear flange of the pipe member does not overlap the first engagement member. In other words, the rear flange may not overlap the tool access path to the first engagement member. Due to this, it may be possible to enhance the ease of assembly of this saddle-riding vehicle. Moreover, since it may be possible to restrain increase in size of the front flange and to ensure that the rear flange does not overlap the tool access path to the first engagement member, it may be possible to restrain increase in size of the pipe member.

Preferably, the saddle-riding or saddle-type vehicle may further include a second engagement member that engages or fixes the cylinder and the front flange together. The first engagement member and the second engagement member may be disposed at mutually different positions around the circumferential direction of the pipe member. In a side view of the vehicle, the rear flange may overlap a prolongation or extrapolation of the second engagement member extending in the axial direction of the second engagement member. The rear flange may not overlap the second engagement member when viewed along the axial direction of the second engagement member. In this case, it may be possible to engage together the cylinder and the front flange solidly with the first engagement member and the second engagement member. Moreover, it may be possible to enhance the ease of assembly, since the rear flange does not overlap the tool access path to the second engagement member.

Preferably, the first engagement member may be disposed above or higher than, and/or toward a first lateral side with respect to, the central axis of the pipe member. The second engagement member may be disposed below or lower than, and/or toward a second lateral side with respect to, the central axis of the pipe member. The first lateral side may be one of the left side and the right side. The second lateral side may be the opposite side to the first lateral side, e.g. the other of the right or left sides. In this case, it may be possible to engage together the cylinder and the front flange solidly with the first engagement member and the second engagement member.

Preferably, the saddle-riding or straddle-type vehicle may further include a third engagement member and/or a fourth engagement member. The third engagement member and/or the fourth engagement member may engage or fix the throttle body and the rear flange together. The rear flange may include a first rear flange hole and/or a second rear flange hole. The third engagement member may pass through the first rear flange hole. The fourth engagement member may pass through the second rear flange hole. The first rear flange hole and the second rear flange hole may be disposed at mutually different positions around the circumferential direction of the pipe member. As seen or viewed along the axial direction of the first engagement member, the first rear flange hole and the second rear flange hole may not overlap the first engagement member. As seen or viewed along the axial direction of the second engagement member, the first rear flange hole and the second rear flange hole may not overlap the second engagement member.

In this case, it may be possible to engage together the throttle body and the rear flange together solidly with the third engagement member and the fourth engagement member. Moreover, the first rear flange hole and the second rear flange hole may not overlap the tool access path to the first engagement member. Yet further, the first rear flange hole and the second rear flange hole may not overlap the tool access path to the second engagement member. Due to this, it may be possible to enhance the ease of assembly.

Preferably, the first engagement member may be disposed above or higher than, and/or toward a first lateral side of, the central axis of the pipe member. The second engagement member may be disposed below or lower than and/or toward a second lateral side of the central axis of the pipe member. The first rear flange hole may be disposed above and/or toward the second lateral side of the central axis of the pipe member. The second rear flange hole may be disposed below and/or toward the first lateral side of the central axis of the pipe member. The first lateral side may be one of the left side and the right side. The second lateral side may be the opposite side to the first lateral side, e.g. the other of the left or right sides. In this case, it may be possible to engage the pipe member solidly to the cylinder and to the throttle body. Moreover, since the regions in which the third engagement member and the fourth engagement member are disposed may be respectively different from those in which the first engagement member and the second engagement member are disposed, the tool access paths to the first engagement member and to the second engagement member may be easily ensured.

Preferably, the saddle-riding or straddle-type vehicle may further include a fuel injection device that injects fuel toward the intake air. The pipe member may include a fuel injection device attachment portion. The fuel injection device may be attached or attachable to the fuel injection device attachment portion. When viewed along the axial direction of the first engagement member, at least a portion of the groove and at least a portion of the fuel injection device attachment portion may overlap. In this case, since the groove and the fuel injection device attachment portion constitute factors that may limit the tool access path to the first engagement member, it may be possible to enhance the freedom of arrangement of the first engagement member by mutually overlapping at least portions of these elements in a view along the axial direction of the first engagement member.

Preferably, the saddle-riding vehicle may further include an air cleaner and a connecting pipe portion. The air cleaner may be disposed behind or rearward of the cylinder. The connection pipe portion may connect the throttle body and the air cleaner. The length of the central axis of the pipe member may be shorter than the sum or total of the length of the central axis of the connecting pipe portion and the length of the central axis of the throttle body. In this case, it may be possible to utilize the restricted space rearward of the cylinder and moreover above the crank case in an effective manner, since it may be possible to make the pipe member more compact. Moreover, with this type of short pipe member, both of the flanges may easily be overlapped, even though, with respect to one of the flanges, the other flange or passage is inclined. However it may still be possible to ensure the ease of assembly, since the tool access path to the first engagement member is ensured.

Preferably, when viewed along the axial direction of the first engagement member, the rear flange may include a concave portion that is concaved so as not to overlap the first engagement member. In this case, the rear flange may not overlap the tool access path to the first engagement member. Due to this, it may be possible to enhance the ease of assembly of the saddle-riding vehicle.

The saddle-riding or straddle-type vehicle may be a sports type vehicle. One of the front or rear flanges may be inclined with respect to the other of the front or rear flanges.

The front flange may include a first front fixing portion and optionally a second front fixing portion. The first front fixing portion and/or the second front fixing portion project further, e.g. radially, from a pipe main body that at least one or each other location on the front flange. The first and/or second front fixing portions may comprise respective first and/or second receiving arrangements, such as a hole or slot, for engaging with or receiving the first and/or second engagement member respectively.

The rear flange may include an annular portion. The rear flange may include a first rear fixing portion and optionally a second rear fixing portion. The first and/or second rear fixing portion may projects from the annular portion. The first rear fixing portion may include a first rear flange hole. The second rear fixing portion may include a second rear flange hole. The first and/or second rear flange hole may be provided, extend or are pierced through the rear flange. The third engagement member may pass through the first rear flange hole. The fourth engagement member may pass through the second rear flange hole.

The groove and/or the fuel injection device attachment portion may be provided above or upwardly of the pipe main body.

The first connection portion may include a seal groove. The seal groove may be arranged so as to surround the periphery of the intake passage and the groove. A seal member may be disposed in the seal grove. The seal member may be an elastic member made from rubber or the like.

According to an aspect of the present invention is a pipe member for connecting a throttle body and a cylinder of a saddle-riding or straddle-type vehicle. The pipe member may comprise a front flange, which may be for attaching to the cylinder, and a rear flange, which may be for attaching to the throttle body. The rear flange may include a groove, which may be for supplying intake air.

The front flange may include a first front fixing portion. The first front fixing portion may be configured to receive or engage with a first engagement member. The first front fixing portion may comprise a first receiving arrangement for engaging with or receiving the first engagement member. The first receiving arrangement may be or comprise a hole, slot or channel, e.g. for receiving the first engagement member, such as a through hole, slot or channel that extends through the first front fixing portion.

The pipe member may be configured such that, in a side view of the pipe member, the rear flange overlaps a prolongation or extrapolation of the first receiving arrangement extending in an axial, longitudinal or through direction of the first receiving arrangement.

The rear flange may not overlap the first receiving arrangement when viewed along the axial, longitudinal or through direction of the first receiving arrangement.

The front flange may include a second front fixing portion. The second front fixing portion may be configured to receive or engage with a second engagement member. The second front fixing portion may comprise a second receiving arrangement for engaging with or receiving the second engagement member. The second receiving arrangement may be or comprise a hole, slot or channel, e.g. for receiving the second engagement member, such as a through hole, slot or channel that extends through the second front fixing portion.

The pipe member may be configured such that, in a side view of the pipe member, the rear flange overlaps a prolongation or extrapolation of the second receiving arrangement extending in an axial or longitudinal or through direction of the second receiving arrangement.

The rear flange may not overlap the second receiving arrangement when viewed along the axial, longitudinal or through direction of the second receiving arrangement.

The first front fixing portion and/or the second front fixing portion may project further, e.g. radially, from the pipe main body that at least one or each other location on the front flange.

The first and second receiving arrangements may be disposed or disposable at mutually different positions around a circumferential direction of the pipe member.

The first receiving arrangement may be disposed or disposable above and/or toward a first lateral side, which may be one of the left and right sides, of a central axis of the pipe member. The second receiving arrangement may be disposed or disposable below and/or toward a second lateral side which is opposite to the first lateral side of the central axis of the pipe member.

The rear flange may include an annular portion. The rear flange may include a first rear fixing portion and optionally a second rear fixing portion. The first and/or second rear fixing portions may project radially from the annular portion. The first rear fixing portion may include a first rear receiving arrangement, such as a hole, slot or channel, such as a first flange hole. The second rear fixing portion may include a second rear receiving arrangement, such as a hole, slot or channel, such as a second flange hole. The first and/or second rear receiving arrangements may be provided, extend or are pierced through the rear flange. A third engagement member may be configured to pass through the first rear receiving arrangement, e.g. in use. A fourth engagement member may be configured to pass through the second rear receiving arrangement, e.g. in use.

The first rear receiving arrangement and the second rear receiving arrangement may be disposed at mutually different positions around the circumferential direction of the pipe member. The first rear receiving arrangement and the second rear receiving arrangement may not overlap the first receiving arrangement as seen along the axial, longitudinal or through direction of the first receiving arrangement. The first rear receiving arrangement and the second rear receiving arrangement may not overlap the second receiving arrangement as seen along the axial, longitudinal or through direction of the second receiving arrangement.

The first receiving arrangement may be disposed or disposable above or higher than, and/or toward a first lateral side, which may be one of the left and right sides, of the central axis of the pipe member. The second receiving arrangement may be disposed or disposable lower than or below, and/or toward a second lateral side, which may be opposite to the first lateral side, of the central axis of the pipe member. The first rear receiving arrangement may be disposed above or higher than, and/or toward the second lateral side of, the central axis of the pipe member. The second rear receiving arrangement may be disposed below or lower than, and/or toward the first lateral side of, the central axis of the pipe member.

The pipe member may further comprise or be configured to receive a fuel injection device. The pipe member may include a fuel injection device attachment portion to which the fuel injection device is attached or attachable. In a view along the axial direction of the first engagement member, at least a portion of the groove and at least a portion of the fuel injection device attachment portion may overlap, e.g. in use.

The rear flange may include a concave portion concaved so as not to overlap the first receiving arrangement in a view along the axial direction of the first receiving arrangement.

The groove and/or the fuel injection device attachment portion may be provided above or upwardly of the pipe main body.

The first connection portion may include a seal groove. The seal groove may be arranged so as to surround the periphery of the intake passage and the groove or passage. A seal member may be disposed in the seal grove. The seal member may be an elastic member made from rubber or the like.

According to an aspect of the present invention is a system or assembly comprising a pipe member, e.g. as described above in relation to any of the above aspects, and at least a first engagement member. The first engagement member may be received or receivable by or within the first receiving arrangement of the pipe member. The first engagement member may be configured to engage or fix together the cylinder and the front flange of the pipe member in use.

The pipe member may be configured such that the rear flange of the pipe member overlaps a prolongation or extrapolation of the first engagement member extending in an axial direction of the first engagement member when viewed in a side view of the pipe member or vehicle, e.g. in use. The rear flange of the pipe member may not overlap the first engagement member, when viewed along the axial direction of the first engagement member, e.g. in use.

The system or assembly may comprise a second engagement member, which may be received or receivable in the second receiving arrangement, e.g. in use. The second engagement member may be configured to engage or fix together the cylinder and the front flange of the pipe member in use.

The system or assembly may comprise third and/or fourth engagement members, which may be received or receivable in the first and/or second rear receiving arrangements respectively, e.g. in use. The third and/or fourth engagement member may be configured to engage or fix together the throttle body and the rear flange of the pipe member in use.

The pipe member of any of the above aspects and/or the assembly or system according to the above aspect may be provided in or configured to be used with the saddle-riding or straddle-type vehicle of any of the above aspects.

It will be appreciated that features analogous to those described above or below in relation to any of the above aspects or below embodiments may be individually and separably or in combination applicable to any of the other aspects or embodiments.

Apparatus features analogous to, or configured to implement, those described above in relation to a method and method features analogous to the use and manufacture of those described above in relation to an apparatus are also intended to fall within the scope of the present invention.

According to the present invention, it may be possible to provide a saddle-riding or straddle-type vehicle in which the throttle body is made more compact and the ease of assembly being enhanced, whilst at the same time it is also possible to restrict increase in size of the pipe member that connects the throttle body to the engine.

### BRIEF DESCRIPTION OF DRAWINGS

- **Figure 1**: a side view of a saddle-riding vehicle;
- **Figure 2**: an enlarged side view of a fuel supply system
- **Figure 3**: an enlarged plan view of this fuel supply system;
- **Figure 4**: a perspective view of a throttle body and a pipe member;
- **Figure 5**: a front view of this throttle body;
- **Figure 6**: a rear view of the throttle body;
- **Figure 7**: a side view of the pipe member;
- **Figure 8**: a rear view of the pipe member;
- **Figure 9**: a side view of the pipe member;
- **Figure 10**: a rear view showing a pipe member according to a first variant embodiment; and
- **Figure 11**: a rear view showing a pipe member according to a second variant embodiment.

### DETAILED DESCRIPTION OF DRAWINGS

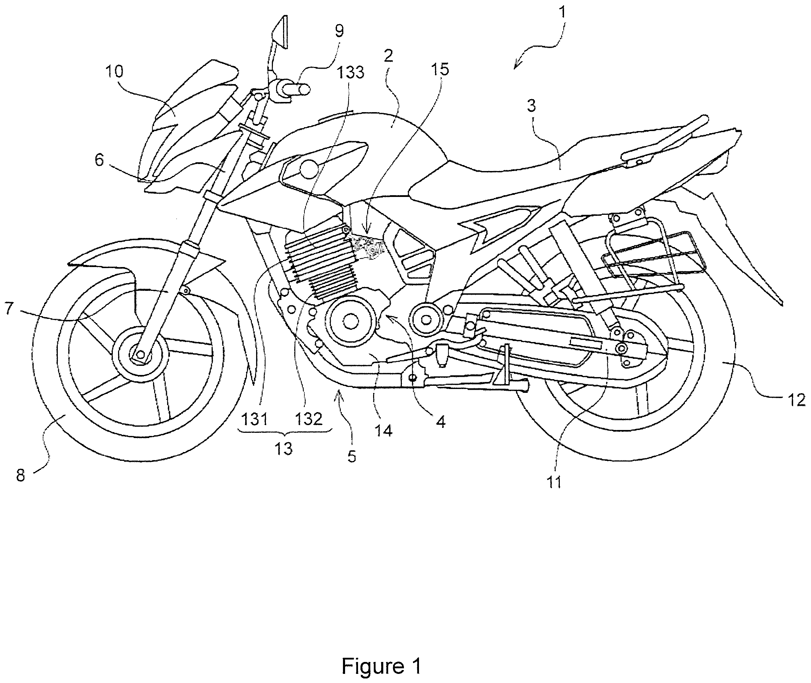

Embodiments of the present invention will now be explained with reference to the drawings. Figure 1 is a side view of a saddle-riding or straddle-type vehicle. In the following explanation, it will be supposed that "front", "rear", "left", and "right" mean front, rear, left, and right from the point of view of a rider who is riding on the saddle-riding or straddle-type vehicle 1. The saddle-riding or straddle-type vehicle 1 is a so called sports type vehicle, for example. The saddle-riding or straddle-type vehicle 1 includes a fuel tank 2, a seat 3, an engine 4, and a vehicle body frame 5.

The fuel tank 2, the seat 3, and the engine 4 are supported by the vehicle body frame 5. The fuel tank 2 is disposed in front of the seat 3. The engine 4 is disposed below the fuel tank 2.

The saddle-riding vehicle 1 includes a head pipe 6, a front fork 7, a front wheel 8, handle 9, and a headlight unit 10. The head pipe 6 is disposed in front of the fuel tank 2. The head pipe 6 rotatably supports a steering shaft not shown in the figures. The front fork 7 is connected to the lower portion of the steering shaft. The front wheel 8 is rotatably supported by the front fork 7. The handle 9 is connected to the upper portion of the steering shaft. The headlight unit 10 is disposed in front of the head pipe 6.

The saddle-riding vehicle includes a swing arm 11 and a rear wheel 12. The swing arm 11 extends rearward from the vehicle body frame 5. The swing arm 11 is connected to the vehicle body frame 5 so as to be capable of pivoting upward and downward. The rear wheel 12 is rotatably supported by a rear portion of the swing arm 11.

The engine 4 includes a cylinder 13 and a crank case 14. Internally, the cylinder 13 includes a combustion chamber. The cylinder 13 includes a cylinder head 131 and a cylinder block 132. The cylinder head 131 is disposed on top of the cylinder block 132. The cylinder axial line is arranged so as to extend in the vertical direction. It should be understood that the concept of the cylinder axial line extending in the vertical direction does not limit the cylinder axial line to extending exactly parallel to the vertical direction and it includes any case in which the angle between the cylinder axial line and the vertical direction is smaller than 45°. The crank case 14 is disposed below or under the cylinder 13. The crank case 14 is connected to the lower portion of the cylinder 13, and extends rearwards therefrom.

In the present embodiment, the engine 4 is an air-cooled type engine. A plurality of cooling fins 133 are provided on the surface of the cylinder 13. However, the engine is not limited to being of the air-cooled type; it would also be acceptable for the engine to be of the water-cooled type or of the oil-cooled type. It should be understood that, in Figure 1, only one reference symbol 133 is appended to the plurality of cooling fins 133, while reference symbols for the other cooling fins 133 are omitted. In the present embodiment, the engine 4 is a single cylinder engine. However the engine is not limited to being of the single cylinder type. It would also be acceptable for the engine to have a plurality of cylinders.

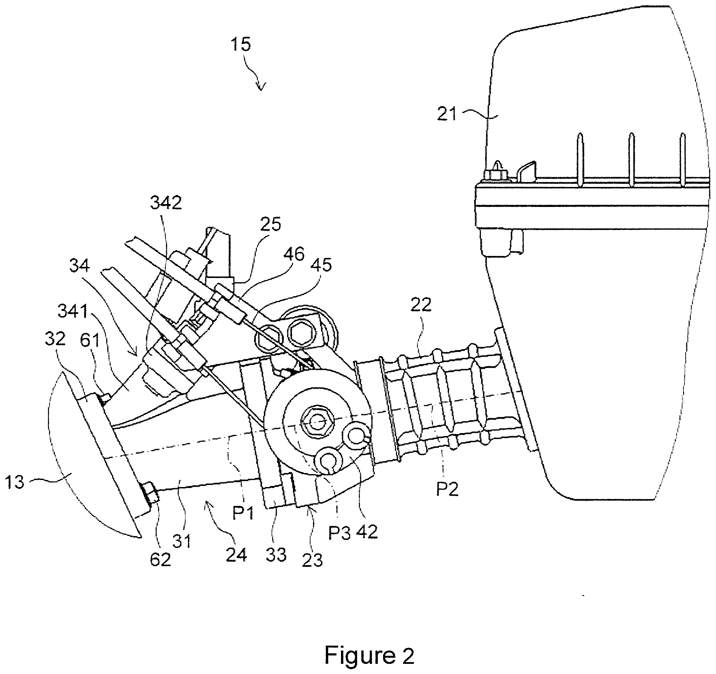

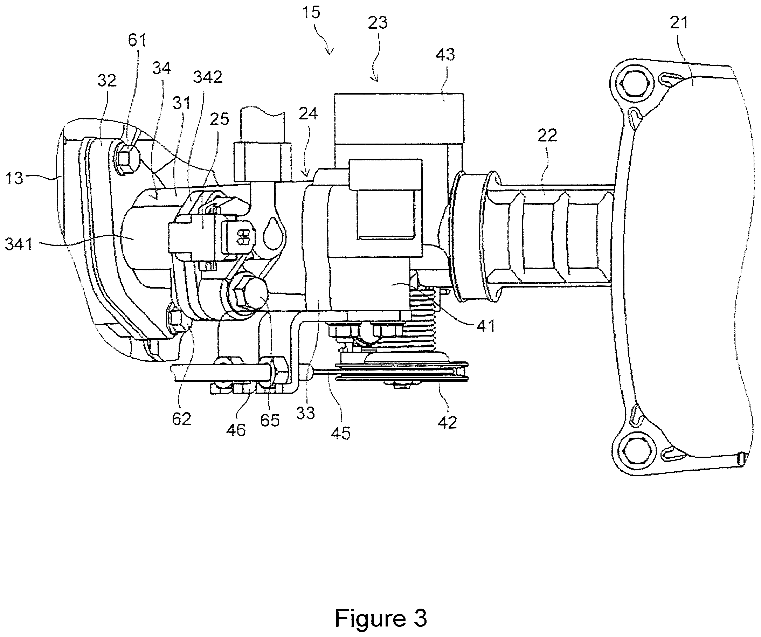

This saddle-riding or straddle-type vehicle 1 also includes a fuel supply system 15. Figure 2 is an enlarged side view of the fuel supply system 15. Figure 3 is an enlarged plan view of the fuel supply system 15. The fuel supply system 15 includes an air cleaner 21, a connecting pipe portion 22, a throttle body 23, a pipe member 24, and a fuel injection device 25. The air cleaner 21 is disposed rearward of the cylinder 13. The air cleaner 21 is also disposed below the fuel tank 2. The connecting pipe portion 22 connects together the throttle body 23 and the air cleaner 21. The connecting pipe portion 22 projects forward from the air cleaner 21.

The throttle body 23 adjusts the flow rate of intake air conducted to and entering the engine 4. The throttle body 23 is disposed rearward of the cylinder 13. The throttle body 23 is disposed below or under the fuel tank 2. The throttle body 23 is disposed between the cylinder 13 and the air cleaner 21. At least a portion of the throttle body 23 is disposed above or over the crank case 14. In other words, in a plan view of the vehicle, at least a portion of the throttle body 23 overlaps the crank case 14. In this manner, at least a portion of the throttle body 23 is disposed in a narrow space rearward of the cylinder 13 and moreover above the crank case 14.

The pipe member 24 connects together the cylinder 13 and the throttle body 23. The pipe member 24 is disposed rearward of the cylinder 23. Moreover, the pipe member 24 includes a pipe main body 31, a front flange 32, and a rear flange 33. The front flange 32 is attached to the cylinder 13. The rear flange 33 is attached to the throttle body 23. The pipe main body 31 is positioned between the front flange 32 and the rear flange 33. The pipe main body 31 connects between the front flange 32 and the rear flange 33. The length of the central axis P1 of the pipe member 24 is shorter than the sum or total of the length of the central axis P2 of the connecting pipe portion 22 and the length of the central axis P3 of the throttle body 23.

The fuel injection device 25 injects fuel into the intake air. The fuel injection device 25 is disposed above or over the pipe member 24. The fuel injection device 25 is attached to the pipe member 24.

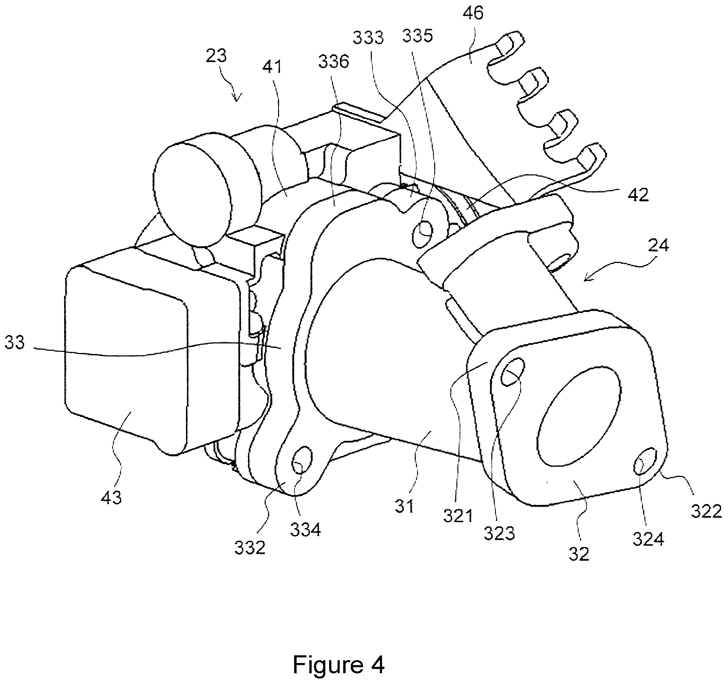

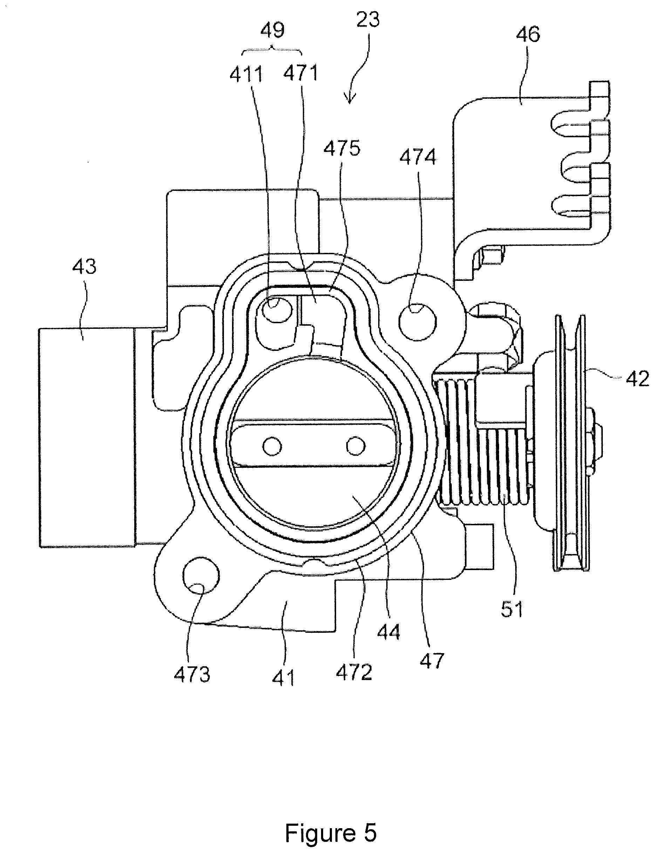

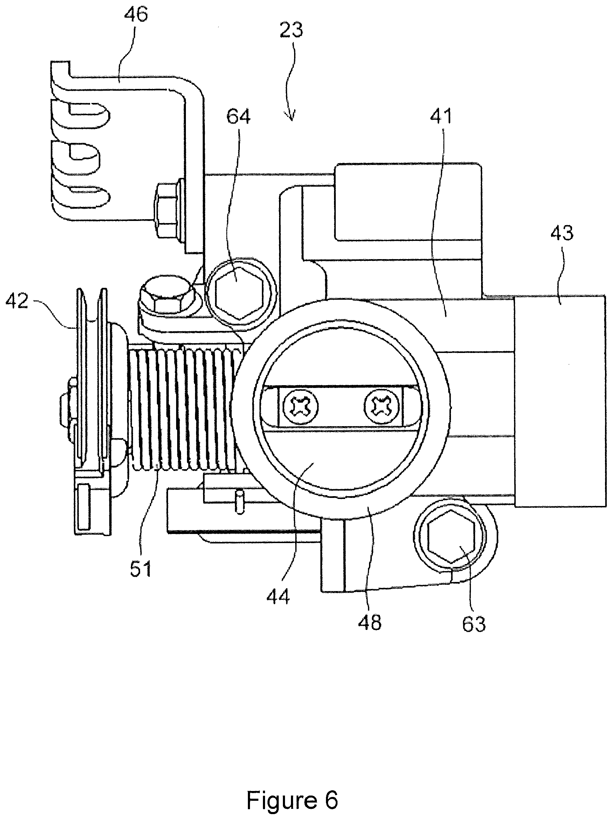

Figure 4 is a perspective view of the throttle body 23 and the pipe member 24. Figure 5 is a front view of the throttle body 23. Figure 6 is a rear view of the throttle body 23. The throttle body 23 includes a main body portion 41, a pulley 42, and a throttle sensor portion 43. The main body portion 41 includes a valve body 44. The valve body 44 is disposed in an intake air passage within the throttle body 23. By the opening amount of the valve body 44 being adjusted, the throttle body 23 adjusts the flow rate of the intake air supplied to the engine 4.

The throttle sensor portion 43 is disposed toward a first lateral side of the main body portion 41. The pulley 42 is disposed toward a second lateral side of the main body portion 41. The first lateral side is one of the left side and the right side, while the second lateral side is the opposite side to the first lateral side, i.e. the other of the left or right side. In the present embodiment, the first lateral side is the right side, while the second lateral side is the left side.

As shown in Figures 2 and 3, a throttle wire 45 is wound around the pulley 42. The opening amount of the valve body 44 is varied by the pulley 42 rotating according to operation of the throttle wire 45. A wire bracket 46 is attached to the throttle body 23. The wire bracket 46 is disposed above the pulley 42. The wire bracket 46 supports the throttle wire 45. It should be understood that an elastic or spring member 51 is disposed between the pulley 42 and the main body portion 41. The elastic or spring member 51 may, for example, be a coil spring. The elastic or spring member 51 biases the pulley 42 in the direction to close the valve body 44.

The throttle sensor portion 43 detects the opening amount of the valve body 44. The throttle sensor portion 43 inputs a detection signal corresponding to the opening amount of the valve body 44 to a control unit not shown in the figures.

As shown in Figure 5, the main body portion 41 includes a first connection portion 47. This first connection portion 47 is provided forward of the main body portion 41. As shown in Figure 6, the main body portion 41 also includes a second connection portion 48. This second connection portion 48 is provided rearward of the main body portion 41. The second connection portion 48 has a tubular shape. The connecting pipe portion 22 described above is connected to the second connection portion 48.

As shown in Figure 5, the first connection portion includes a groove, channel or passage 471 for conducting intake air. Along with a hole 411 that is provided in the main body portion 4, the groove, channel or passage 471 constitutes an auxiliary flow conduit 49. The auxiliary flow conduit 49 bypasses from an upstream side of the valve body 44 to its downstream side. The auxiliary flow conduit 49 can be freely opened and closed by an actuator. For example, when the engine 4 is being started, the intake air amount may be increased to an amount greater than that corresponding to the opening amount of the valve body 44 by the auxiliary flow conduit 49 being opened.

The first connection portion 47 includes a seal groove 472. The seal groove 472 is arranged so as to surround the periphery of the intake passage and the groove, channel or passage 471 of the throttle body 23. A seal member not shown in the figures is disposed in the seal grove 472. The seal member is an elastic member made from rubber or the like.

As shown in Figure 5, the first connection portion 47 includes a first throttle body hole 473 and a second throttle body hole 474. The first throttle body hole 473 and the second throttle body hole 474 are provided or pierced in the main body portion 41. As seen in the axial directions of the first throttle body hole 473 and the second throttle body hole 474, the first throttle body hole 473 and the second throttle body hole 474 are disposed exterior to the seal groove 472.

In detail, the first throttle body hole 473 is positioned toward the first lateral side with respect to the central axis of the intake passage within the throttle body 23. The second throttle body hole 474 is positioned toward the second lateral side with respect to the central axis of the intake passage within the throttle body 23. The first throttle body hole 473 is positioned lower than or below to the central axis of the intake passage within the throttle body 23. The second throttle body hole 474 is positioned higher than or above the central axis of the intake passage within the throttle body 23.

The first connection portion 47 includes a first auxiliary flow conduit structural portion 475. The first auxiliary flow conduit structural portion 475 is positioned above the intake passage within the throttle body 23. The first auxiliary flow conduit structural portion 475 is positioned above the central axis of the intake passage within the throttle body 23. The groove, channel or passage 471 described above is provided in the first auxiliary flow conduit structural portion 475.

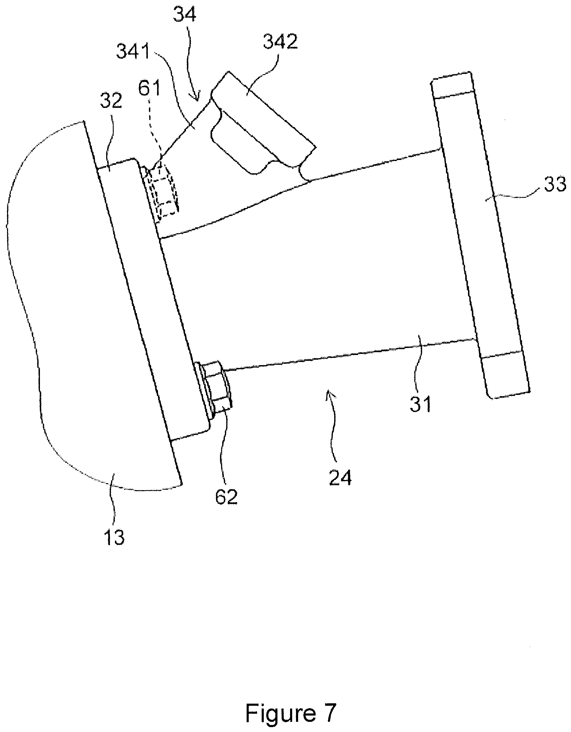

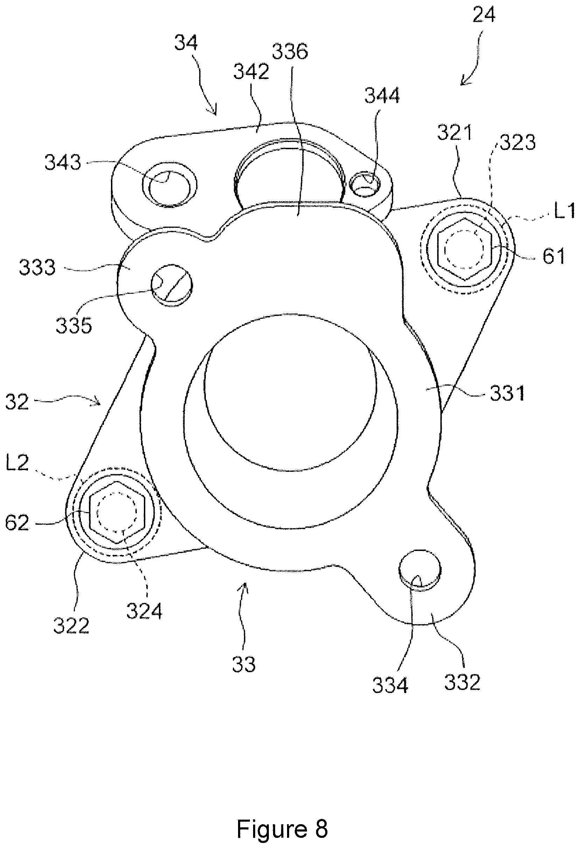

Figure 7 is a side view of the pipe member 24 and Figure 8 is a rear view of the pipe member 24. As shown in Figure 8, the front flange 32 includes a first front fixing portion 321 and a second front fixing portion 322. As compared to other locations on the front flange 32, the first front fixing portion 321 and the second front fixing portion 322 project further from the pipe main body 31. The first front fixing portion 321 includes a first front flange hole 323. The second front fixing portion 322 includes a second front flange hole 324. The first front flange hole 323 and the second front flange hole 324 extend or are provided or pierced through the front flange 32. A first engagement member 61 is passed through the first front flange hole 323. A second engagement member 62 is passed through the second front flange hole 324. The first engagement member 61 and the second engagement member 62 are bolts for example, and fix or engage together the cylinder 13 and the front flange 32. Moreover, the first engagement member 61 and the second engagement member 62 are arranged at mutually different positions around the circumferential direction of the pipe member 24.

In detail, the first front flange hole 323 is disposed higher than or above the central axis of the pipe member 24. The first front flange hole 323 is disposed on the first lateral side of the central axis of the pipe member 24. The second front flange hole 324 is disposed below or lower than the central axis of the pipe member 24. The second front flange hole 324 is disposed on the second lateral side of the central axis of the pipe member 24. Accordingly, the first engagement member 61 is disposed above and toward the first lateral side with respect to the central axis of the pipe member 24. Moreover, the second engagement member 62 is disposed below and toward the second lateral side with respect to the central axis of the pipe member 24.

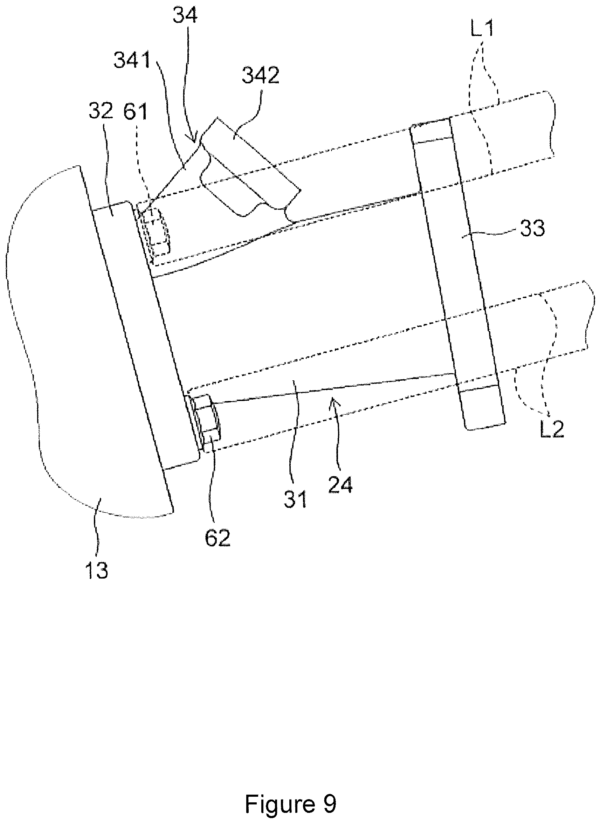

As shown in Figure 9, in a side view of the vehicle, the rear flange 33 overlaps a prolongation or extrapolation L1 of the first engagement member 61 that extends along the axial direction of the first engagement member 61. Moreover, in a side view of the vehicle, the rear flange 33 overlaps a prolongation or extrapolation L2 of the second engagement member 61 that extends along the axial direction of the second engagement member 62. The prolongation or extrapolation L1 and/or prolongation or extrapolation L2 can be cylindrical for example, and generally define respective tool access paths to the first and second engagement members 61, 62. It should be understood that, since the prolongation or extrapolation L1 indicates the tool access path to the first engagement member 61, accordingly it is defined to be larger (e.g. larger in diameter) than the head of the first engagement member 61. Moreover, since the prolongation or extrapolation L2 indicates the tool access path to the second engagement member 62, accordingly it is defined to be larger (e.g. larger in diameter) than the head of the second engagement member 62. As shown in Figure 8, as seen or viewed along the axial direction of the first engagement member 61, the rear flange 33 does not overlap the first engagement member 61. Moreover, as seen or viewed along the axial direction of the second engagement member 62, the rear flange 33 does not overlap the second engagement member 62. It should be understood that, in the present embodiment, the axial direction of the first engagement member 61 and the axial direction of the second engagement member 62 are mutually parallel.

The rear flange 33 includes an annular portion 331, a first rear fixing portion 332, and a second rear fixing portion 333. The first rear fixing portion 332 projects from the annular portion 331. Moreover, the second rear fixing portion 333 projects from the annular portion 331. The first rear fixing portion 332 includes a first rear flange hole 334. The second rear fixing portion 333 includes a second rear flange hole 335. The first rear flange hole 334 and the second rear flange hole 335 are provided, extend or are pierced through the rear flange 33. A third engagement member 63 shown in Figure 6 is passed through the first rear flange hole 334 and the first throttle body hole 473 described above. A fourth engagement member 64 is passed through the second rear flange hole 335 and the second throttle body hole 474 described above. The third engagement member 63 and the fourth engagement member 64 are bolts for example, and engage together the throttle body 23 and the rear flange 33.

The first rear flange hole 334 and the second rear flange hole 335 are disposed at mutually different positions around the circumferential direction of the pipe member 24. When seen or viewed along the axial direction of the first engagement member 61, the first rear flange hole 334 and the second rear flange hole 335 do not overlap the first engagement member 61. Moreover, when seen or viewed along the axial direction of the second engagement member 62, the first rear flange hole 334 and the second rear flange hole 335 do not overlap the second engagement member 62.

The first rear fixing portion 332 is disposed toward the first lateral side of the central axis of the pipe member 24. Moreover, the first rear fixing portion 332 is disposed lower than or below the central axis of the pipe member 24. Accordingly, the first rear flange hole 334 is disposed toward the first lateral side of the central axis of the pipe member 24. Moreover, the first rear flange hole 334 is disposed below or lower than the central axis of the pipe member 24.

The second rear fixing portion 333 is disposed toward the second lateral side of the central axis of the pipe member 24. Moreover, the second rear fixing portion 333 is disposed above or higher than the central axis of the pipe member 24. Accordingly, with respect to the central axis of the pipe member 24, the second rear flange hole 335 is disposed toward the second lateral side. Moreover, the second rear flange hole 335 is disposed above or higher than the central axis of the pipe member 24.

Accordingly, the third engagement member 63 is disposed below or lower than and moreover towards the first lateral side of the central axis of the pipe member 24. The fourth engagement member 64 is disposed above or higher than and moreover towards the second lateral side of the central axis of the pipe member 24.

The rear flange 33 includes a second auxiliary flow conduit structural portion 336. The second auxiliary flow conduit structural portion 336 has a planar shape, and is disposed so as to oppose and confront the first auxiliary flow conduit structural portion 475. Together with the first auxiliary flow conduit structural portion 475, the second auxiliary flow conduit structural portion 336 constitutes a portion of the auxiliary flow conduit 49. The second auxiliary flow conduit structural portion 336 projects upward from the annular portion 331. The second auxiliary flow conduit structural portion 336 is positioned above or higher than the central axis of the pipe member 24.

The pipe member 24 includes a fuel injection device attachment portion 34. The fuel injection device 25 is attached or attachable to the fuel injection device attachment portion 34. The fuel injection device attachment portion 34 projects upward from the pipe main body 31. In a view along the axial direction of the first engagement member 61, a portion of the second auxiliary flow conduit structural portion 336 and a portion of the fuel injection device attachment portion 34 are overlapped. Accordingly, in a view along the axial direction of the first engagement member 61, a portion of the groove, channel or passage 471 and a portion of the fuel injection device attachment portion 34 are overlapped.

In detail, the fuel injection device attachment portion 34 includes a pipe portion 341 and a flange portion 342. The pipe portion 341 is connected to the pipe main body 31. The flange portion 342 is provided at the end portion of the pipe portion 341. The flange portion 342 includes a first fixing hole 343. The first fixing hole 343 extends or is provided or pierced through the flange portion 342. The first fixing hole 343 is disposed toward the second lateral side of the central axis of the pipe member 24. The flange portion 342 includes a second fixing hole 344. The second fixing hole 344 extends or is provided or pierced through the flange portion 342. The second fixing hole 344 is disposed toward the first lateral side of the central axis of the pipe member 24. The first fixing hole 343 is larger than the second fixing hole 344, e.g. larger in diameter. A fifth engagement member 65 shown in Figure 3 is fitted into the first fixing hole 343. The fifth engagement member 65 is a bolt for example, and engages together the fuel injection device attachment portion 34 and the fuel injection device 25. The second fixing hole 344 is formed for restraining rotation of the fuel injection device 25.

With the saddle-riding vehicle 1 according to the embodiment explained above, the throttle body 23 is connected to the pipe member 24 by connection together of their respective flanges. Due to this, along with it being possible to reduce the number of components, it is also possible to provide the auxiliary flow conduit 49 with a simple construction. Moreover, as seen along the axial direction of the first engagement member 61, the rear flange 33 of the pipe member 24 does not overlap the first engagement member 61. In other words, the rear flange 33 does not overlap the tool access path to the first engagement member 61. Moreover, as seen along the axial direction of the second engagement member 62, the rear flange 33 does not overlap the second engagement member. In other words, the rear flange 33 does not overlap the tool access path to the second engagement member 62. Due to this, it is possible to enhance the ease of assembly of the saddle-riding vehicle 1. Moreover it is possible to suppress increase in the size of the pipe member 24 since, while restraining increase in size of the front flange 32, it is still possible to ensure that the rear flange 33 does not overlap the tool access path to the first engagement member 61 or the tool access path to the second engagement member 62.

Moreover, if the engine 4 is equipped with fins 133, then, if the front flange 32 becomes large, there is the problem that, in order to avoid any interference with the front flange 32, the fins 133 of the cylinder 13 become smaller. However, with the saddle-riding vehicle 1 according to present embodiment, even if the fins 133 are not small, it is still possible to prevent interference between the front flange 32 and the fins 133, since it is possible to suppress increase in size of the front flange 32.

The first engagement member 61 is disposed above and moreover towards the first lateral side with respect to the central axis of the pipe member 24. Moreover, the second engagement member 62 is disposed below and moreover towards the second lateral side with respect to the central axis of the pipe member 24. Due to this, it is possible to engage together the cylinder 13 and the front flange 32 solidly with the first engagement member 61 and the second engagement member 62.

Furthermore, the third engagement member 63 is disposed above and moreover towards the second lateral side with respect to the central axis of the pipe member 24. The fourth engagement member 64 is disposed below and moreover towards the first lateral side with respect to the central axis of the pipe member 24. Due to this, it is possible to engage together the cylinder 13 and the rear flange 33 solidly with the third engagement member 63 and the fourth engagement member 64.

Furthermore, since the regions in which the third engagement member 63 and the fourth engagement member 64 are disposed are different to the regions in which the first engagement member 61 and the second engagement member 62 are respectively disposed, e.g. when viewed along the axial direction of the first or second engagement members 61, 62 or circumferentially around the central axis P1 of the pipe member 24, it is simple and easy to ensure the tool access paths to the first engagement member 61 and to the second engagement member 62.

In a view along the axial direction of the first engagement member 61, a portion of the second auxiliary flow conduit structural portion 336 overlaps a portion of the fuel injection device attachment portion 34. Since the second auxiliary flow conduit structural portion 336 and the fuel injection device attachment portion 34 constitute factors that limit the tool access path to the first engagement member 61, it is possible to enhance the freedom for arranging the first engagement member 61 and the second engagement member 62 by providing these portions such that they overlap when viewed along the axial direction of the first engagement member 61.

The length of the central axis P1 of the pipe member 24 is shorter than the sum or total of the length of the central axis P2 of the connecting pipe portion 22 and the length of the central axis P3 of the throttle body 23. As a result, it is possible to make the pipe member 24 more compact. Therefore, it is possible to utilize the restricted space rearward of the cylinder 13 and moreover above the crank case 14 in an effective manner. Furthermore, with a pipe member 24 that is short in this way, even if one of the flanges or the passage is inclined with respect to the other flange, it is still easy to overlap the two flanges. However, since the tool access path to the first engagement member 61 and the tool access path to the second engagement member 62 are ensured, it is possible to enhance the ease of assembly.

While an embodiment of the present invention has been explained above, the present invention is not to be considered as being limited to the embodiment described above, and various changes are possible provided that the essence of the invention is not departed from.

The terms "saddle-riding vehicle" or "straddle-type vehicle" include a motorcycle, an all-terrain vehicle, or a snowmobile. Moreover, the term "motorcycle" includes a scooter or a moped. The terms "saddle-riding vehicle" or "straddle-type vehicle" are not limited to referring to a two-wheeled vehicle and they also include a three-wheeled vehicle or a four-wheeled vehicle, for example.

In the embodiment described above, the passage, channel or groove 471 is provided in the first connection portion 47 of the throttle body 23. However, it would also be acceptable for a groove for feeding in intake air to be provided in the rear flange 33 or it would also be acceptable for grooves to be formed both in the first connection portion 47 of the throttle body 23 and in the rear flange 33. The groove is not limited to being an auxiliary bypass flow conduit. For example, it would also be acceptable to employ the groove, channel or passage as an auxiliary flow conduit that conducts a portion of the intake air for measurement of the pressure of the intake air.

It would also be acceptable for the entire groove, channel or passage 471 to overlap the fuel injection device attachment portion 34 in a view along the axial direction of the first engagement member 61. It would also be acceptable for the entire fuel injection device attachment portion 34 to overlap the groove, channel or passage 471 in a view along the axial direction of the first engagement member 61.

It would also be acceptable for the length P1 of the central axis of the pipe member 24 to be greater than or equal to the sum or total of the length P2 of the central axis of the connecting pipe portion 22 and the length P3 of the central axis of the throttle body 23.

The number of engagement members that fix or engage together the front flange 32 and the cylinder 13 is not limited to being two and it would also be acceptable for this number to be one, or three or more. The number of the engagement members that engage together the rear flange 33 and the throttle body 23 is also not limited to being two and it would also be acceptable for this number to be one, or three or more.

In the embodiment described above, the first lateral side is the right side and the second lateral side is the left side. However, it would also be acceptable for the first lateral side to be the left side and the second lateral side to be the right side. In other words, the first engagement member 61 and the second engagement member 62 could be arranged in a configuration that is opposite left and right to the configuration of the embodiment described above. It would also be acceptable for the first engagement member 61 and the second engagement member 62 to be arranged in a configuration that is opposite up and down or higher and lower to the configuration of the embodiment described above.

It would also be acceptable for the third engagement member 63 and the fourth engagement member 64 to be arranged in a configuration that is opposite left and right to the configuration of the embodiment described above. It would also be acceptable for the third engagement member 63 and the fourth engagement member 64 to be arranged in a configuration that is opposite in terms of up and down or higher and lower to the configuration of the embodiment described above.

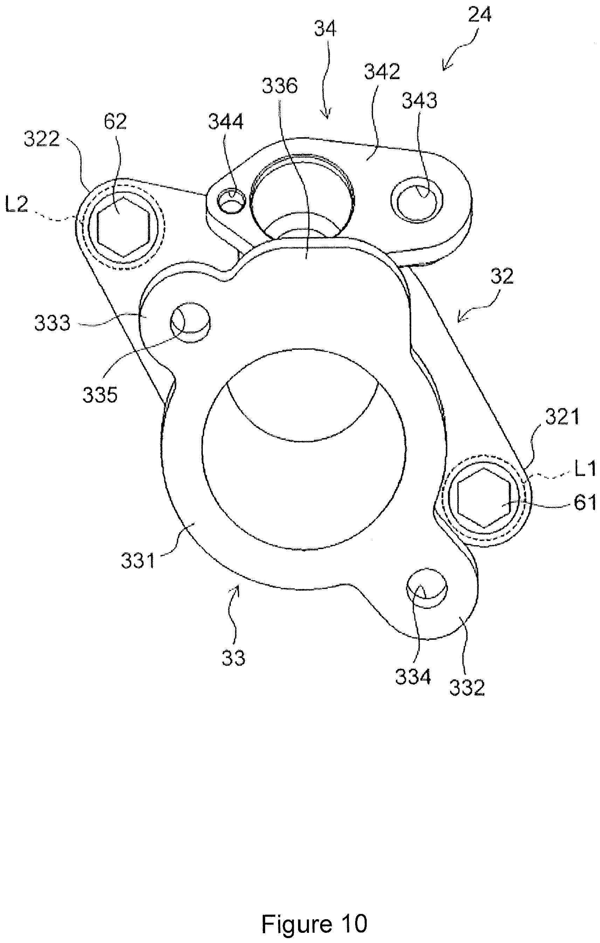

The configuration of the first engagement member 61, the second engagement member 62, the third engagement member 63, and the fourth engagement member 64 is not limited to the configuration of the embodiment described above. For example, in a first variant embodiment shown in Figure 10, it would also be acceptable for the first engagement member 61 to be disposed below and moreover toward the first lateral side with respect to the central axis of the pipe member 24, in a similar manner to the first rear flange hole 334. In other words, it would be acceptable for the first engagement member 61 and the third engagement member 63 to be disposed below and moreover toward the first lateral side with respect to the central axis of the pipe member 24. Furthermore, it would also be acceptable for the second engagement member 62 to be disposed above and moreover toward the second lateral side with respect to the central axis of the pipe member 24, in a similar manner to the second rear flange hole 335. In other words, it would be acceptable for the second engagement member 62 and the fourth engagement member 64 to be disposed above and moreover toward the second lateral side with respect to the central axis of the pipe member 24.

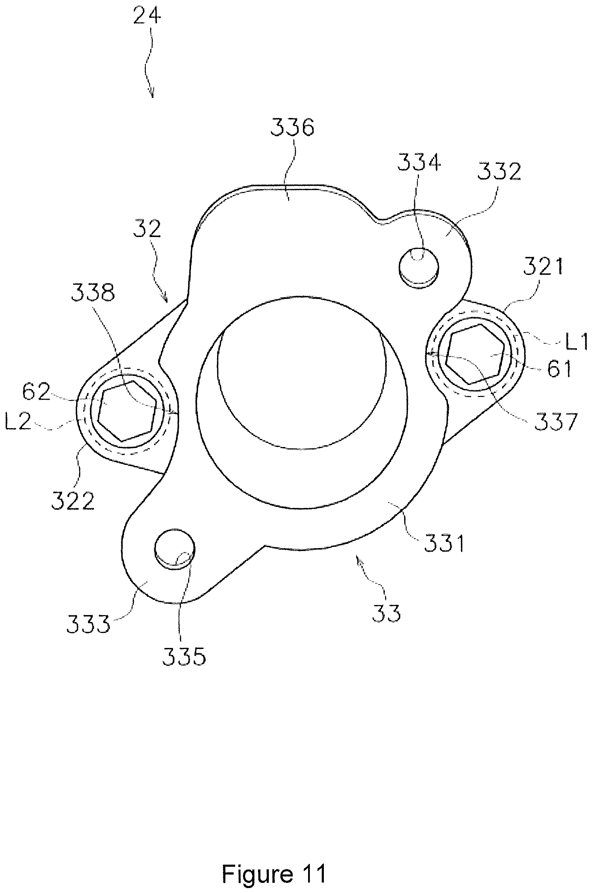

In a second variant embodiment shown in Figure 11, it would also be acceptable to arrange for the rear flange 33 to have a first concave portion 337 that is concaved so as not to overlap the first engagement member 61 as seen along the axial direction of the first engagement member 61. Moreover, it would also be acceptable to arrange for the rear flange 33 to have a second concave portion 338 that is concaved so as not to overlap the second engagement member 62 as seen along the axial direction of the second engagement member 62. In this case as well, the rear flange 33 does not overlap the tool access path to the first engagement member 61 or over the tool access path to the second engagement member 62. Due to this, it is possible to enhance the ease of assembly of the saddle-riding or straddle-type vehicle 1

## Claims

1. A saddle-riding or straddle-type vehicle (1), comprising:
an engine (4) including a cylinder (13) and a crank case (14) connected to a lower portion of the cylinder (13) and extending rearward;
a throttle body (23) disposed rearward of the cylinder (13) and being configured to adjust a flow rate of intake air supplied into the engine (4);
a pipe member (24) including a front flange (32) attached to the cylinder (13) and a rear flange (33) attached to the throttle body (23), the pipe member (24) connecting the cylinder (13) and the throttle body (23); and
a first engagement member (61) engaging together the cylinder (13) and the front flange(32), wherein:
in a plan view of the vehicle (1), at least a portion of the throttle body (23) overlaps the crank case (14);
the throttle body (23) includes a connection portion (47) connected to the rear flange (33);
at least one of the connection portion (47) of the throttle body (23) and the rear flange (33) includes a groove (471) for supplying intake air;
in a side view of the vehicle (1), the rear flange (33) overlaps a prolongation or extrapolation (L1) of the first engagement member (61) extending in an axial direction of the first engagement member (61); and
when viewed along the axial direction of the first engagement member (61), the rear flange (33) does not overlap the first engagement member (61), wherein
the groove (471) constitutes an auxiliary flow conduit (49); and
the auxiliary flow conduit (49) bypasses from an upstream side of a valve body (44) to a downstream side of the valve body (44).

2. A saddle-riding or straddle-type vehicle (1) according to Claim 1, further comprising a second engagement member (62) engaging together the cylinder (13) and the front flange (32), and wherein
the first engagement member (61) and the second engagement member (62) are disposed at mutually different positions around a circumferential direction of the pipe member (24);
in a side view of the vehicle (1), the rear flange (33) overlaps a prolongation or extrapolation (L2) of the second engagement member (62) extending in an axial direction of the second engagement member (62); and
as seen along the axial direction of the second engagement member (62), the rear flange (33) does not overlap the second engagement member (62).

3. A saddle-riding or straddle-type vehicle (1) according to Claim 2, wherein:
the first engagement member (61)is disposed above and moreover toward a first lateral side, which is one of the left and right sides, of a central axis of the pipe member (24); and
the second engagement member (62) is disposed below and moreover toward a second lateral side which is opposite to the first lateral side of the central axis of the pipe member (24).

4. A saddle-riding or straddle-type vehicle (1) according to Claim 2 or Claim 3, further comprising a third engagement member (63) and a fourth engagement member (64) that engage together the throttle body (23) and the rear flange (33), and wherein:
the rear flange (33) includes a first rear flange hole (334) and a second rear flange hole (335);
the third engagement member (63) passes through the first rear flange hole (334);
the fourth engagement member (64) passes through the second rear flange hole (335);
the first rear flange hole (334) and the second rear flange hole (335) are disposed at mutually different positions around the circumferential direction of the pipe member (24);
as seen along the axial direction of the first engagement member (61), the first rear flange hole (334) and the second rear flange hole (225) do not overlap the first engagement member (61); and
as seen along the axial direction of the second engagement member (62), the first rear flange hole (334) and the second rear flange hole (335) do not overlap the second engagement member (62).

5. A saddle-riding or straddle-type vehicle (1) according to Claim 4, wherein
the first engagement member (61) is disposed above and moreover toward a first lateral side, which is one of the left and right sides, of the central axis of the pipe member (24);
the second engagement member (62) is disposed below and moreover toward a second lateral side, which is opposite to the first lateral side, of the central axis of the pipe member (24);
the first rear flange hole (334) is disposed above and moreover toward the second lateral side of the central axis of the pipe member (24); and
the second rear flange hole (335) is disposed below and moreover toward the first lateral side of with respect to the central axis of the pipe member (24).

6. A saddle-riding or straddle-type vehicle (1) according to any preceding Claim, further comprising a fuel injection device (25) configured to inject fuel toward the intake air, and wherein
the pipe member (24) includes a fuel injection device attachment portion (34) to which the fuel injection device (25) is attached; and
in a view along the axial direction of the first engagement member (61), at least a portion of the groove (471) and at least a portion of the fuel injection device attachment portion (34) are overlapped.

7. A saddle-riding or straddle-type vehicle (1) according to any preceding Claim, further comprising:
an air cleaner (21) disposed rearward of the cylinder (13); and
a connection pipe portion (22) connecting the throttle body (23) and the air cleaner (21); and wherein
a length of a central axis of the pipe member (24) is shorter than a sum or total of a length of a central axis of the connecting pipe portion (22) and a length of a central axis of the throttle body (23).

8. A saddle-riding or straddle-type vehicle (1) according to any preceding Claim, wherein, in a view along the axial direction of the first engagement member (61), the rear flange (33) includes a concave portion (337) concaved so as not to overlap the first engagement member (61).

## Patentansprüche

1. Reitsitz- oder Spreizsitz-Fahrzeug (1), das Folgendes umfasst:
einen Motor (4), der einen Zylinder (13) und ein Kurbelgehäuse (14), das mit einem unteren Abschnitt des Zylinders (13) verbunden ist und sich nach hinten erstreckt, einschließt,
einen Drosselkörper (23), der hinter dem Zylinder (13) angeordnet ist und dafür konfiguriert ist, eine Durchflussmenge von Ansaugluft, die in den Motor (4) zugeführt wird, einzustellen,
ein Rohrelement (24), das einen vorderen Flansch (32), der an dem Zylinder (13) befestigt ist, und einen hinteren Flansch (33), der an dem Drosselkörper (23) befestigt ist, einschließt, wobei das Rohrelement (24) den Zylinder (13) und den Drosselkörper (23) verbindet, und
ein erstes Eingriffselement (61), das den Zylinder (13) und den vorderen Flansch (32) zusammen in Eingriff nimmt, wobei:
in einer Draufsicht des Fahrzeugs (1), wenigstens ein Abschnitt des Drosselkörpers (23) das Kurbelgehäuse (14) überlappt,
der Drosselkörper (23) einen Verbindungsabschnitt (47) einschließt, der mit dem hinteren Flansch (33) verbunden ist,
mindestens eines von dem Verbindungsabschnitt (47) des Drosselkörpers (23) und dem hinteren Flansch (33) eine Rinne (471) zum Zuführen von Ansaugluft einschließt,
in einer Seitenansicht des Fahrzeugs (1), der hintere Flansch (33) eine Verlängerung oder Fortführung (L1) des ersten Eingriffselements (61), die sich in einer axialen Richtung des ersten Eingriffselements (61) erstreckt, überlappt und,
wenn entlang der axialen Richtung des ersten Eingriffselements (61) betrachtet, der hintere Flansch (33) das erste Eingriffselement (61) nicht überlappt, wobei
die Rinne (471) eine Hilfsströmungsleitung (49) darstellt und
die Hilfsströmungsleitung (49) von einer stromaufwärts gelegenen Seite eines Ventilkörpers (44) bis zu einer stromabwärts gelegenen Seite des Ventilkörpers (44) umleitet.

2. Reitsitz- oder Spreizsitz-Fahrzeug (1) nach Anspruch 1, das ferner ein zweites Eingriffselement (62) umfasst, das den Zylinder (13) und den vorderen Flansch (32) zusammen in Eingriff nimmt, und wobei
das erste Eingriffselement (61) und das zweite Eingriffselement (62) an wechselseitig unterschiedlichen Positionen in einer Umfangsrichtung des Rohrelements (24) angeordnet sind,
in einer Seitenansicht des Fahrzeugs (1), der hintere Flansch (33) eine Verlängerung oder Fortführung (L2) des zweiten Eingriffselements (62), die sich in einer axialen Richtung des zweiten Eingriffselements (62) erstreckt, überlappt und,
gesehen entlang der axialen Richtung des zweiten Eingriffselements (62), der hintere Flansch (33) das zweite Eingriffselement (62) nicht überlappt.

3. Reitsitz- oder Spreizsitz-Fahrzeug (1) nach Anspruch 2, wobei:
das erste Eingriffselement (61) oberhalb und darüber hinaus hin zu einer ersten seitlichen Seite, die eine von der linken und der rechten Seite ist, einer Mittelachse des Rohrelements (24) angeordnet ist, und
das zweite Eingriffselement (62) unterhalb und darüber hinaus hin zu einer zweiten seitlichen Seite, die entgegengesetzt zu der ersten seitlichen Seite ist, der Mittelachse des Rohrelements (24) angeordnet ist.

4. Reitsitz- oder Spreizsitz-Fahrzeug (1) nach Anspruch 2 oder Anspruch 3, das ferner ein drittes Eingriffselement (63) und ein viertes Eingriffselement (64) umfasst, die den Drosselkörper (23) und den hinteren Flansch (33) zusammen in Eingriff nehmen, und wobei:
der hintere Flansch (33) ein erstes hinteres Flanschloch (334) und ein zweites hinteres Flanschloch (335) einschließt,
das dritte Eingriffselement (63) durch das erste hintere Flanschloch (334) hindurchgeht,
das vierte Eingriffselement (64) durch das zweite hintere Flanschloch (335) hindurchgeht,
das erste hintere Flanschloch (334) und das zweite hintere Flanschloch (335) an wechselseitig unterschiedlichen Positionen in die Umfangsrichtung des Rohrelements (24) angeordnet sind,
gesehen entlang der axialen Richtung des ersten Eingriffselements (61), das erste hintere Flanschloch (334) und das zweite hintere Flanschloch (225) das erste Eingriffselement (61) nicht überlappen, und
gesehen entlang der axialen Richtung des zweiten Eingriffselements (62), das erste hintere Flanschloch (334) und das zweite hintere Flanschloch (335) das zweite Eingriffselement (62) nicht überlappen.

5. Reitsitz- oder Spreizsitz-Fahrzeug (1) nach Anspruch 4, wobei
das erste Eingriffselement (61) oberhalb und darüber hinaus hin zu einer ersten seitlichen Seite, die eine von der linken und der rechten Seite ist, der Mittelachse des Rohrelements (24) angeordnet ist,
das zweite Eingriffselement (62) unterhalb und darüber hinaus hin zu einer zweiten seitlichen Seite, die entgegengesetzt zu der ersten seitlichen Seite ist, der Mittelachse des Rohrelements (24) angeordnet ist,
das erste hintere Flanschloch (334) oberhalb und darüber hinaus hin zu der zweiten seitlichen Seite der Mittelachse des Rohrelements (24) angeordnet ist und
das zweite hintere Flanschloch (335) unterhalb und darüber hinaus hin zu der ersten seitlichen Seite in Bezug auf die Mittelachse des Rohrelements (24) angeordnet ist.

6. Reitsitz- oder Spreizsitz-Fahrzeug (1) nach einem der vorhergehenden Ansprüche, das ferner eine Kraftstoff-Einspritzvorrichtung (25) umfasst, die dafür konfiguriert ist, Kraftstoff zu der Ansaugluft hin einzuspritzen, und wobei
das Rohrelement (24) einen Kraftstoff-Einspritzvorrichtung-Befestigungsabschnitt (34) einschließt, an dem die Kraftstoff-Einspritzvorrichtung (25) befestigt ist, und,
in einer Ansicht entlang der axialen Richtung des ersten Eingriffselements (61), mindestens ein Abschnitt der Rinne (471) und ein Abschnitt des Kraftstoff-Einspritzvorrichtung-Befestigungsabschnitts (34) überlappt sind.

7. Reitsitz- oder Spreizsitz-Fahrzeug (1) nach einem der vorhergehenden Ansprüche, das ferner Folgendes umfasst:
einen Luftfilter (21), der hinter dem Zylinder (13) angeordnet ist, und
einen Verbindungsrohrabschnitt (22), der den Drosselkörper (23) und den Luftfilter (21) verbindet, und wobei
eine Länge der Mittelachse des Rohrelements (24) kürzer ist als eine Summe oder ein Gesamtbetrag einer Länge der Mittelachse des Verbindungsrohrabschnitts (22) und einer Länge der Mittelachse des Drosselkörpers (23).

8. Reitsitz- oder Spreizsitz-Fahrzeug (1) nach einem der vorhergehenden Ansprüche, wobei, in einer Ansicht entlang der axialen Richtung des ersten Eingriffselements (61), der hintere Flansch (33) einen konkaven Abschnitt (337) einschließt, der so nach innen gewölbt ist, dass er das erste Eingriffselement (61) nicht überlappt.

## Revendications

1. Véhicule de type à califourchon ou à enfourcher (1), comprenant :
un moteur (4) incluant un cylindre (13) et un carter (14) raccordé à une partie inférieure du cylindre (13) et s'étendant vers l'arrière ;
un corps de papillon (23) disposé vers l'arrière du cylindre (13) et étant configuré pour ajuster un débit d'air d'admission fourni dans le moteur (4) ;
un élément de tuyau (24) incluant une collerette avant (32) attachée au cylindre (13) et une collerette arrière (33) attachée au corps de papillon (23), l'élément de tuyau (24) raccordant le cylindre (13) et le corps de papillon (23) ; et
un premier élément d'engagement (61) engageant le cylindre (13) et la collerette avant (32), dans lequel :
dans une vue planaire du véhicule (1), au moins une partie du corps de papillon (23) chevauche le carter (14) ;
le corps de papillon (23) inclut une partie de raccord (47) raccordée à la collerette arrière (33) ;
au moins l'une parmi la partie de raccord (47) du corps de papillon (23) et la collerette arrière (33) inclut une rainure (471) pour alimenter de l'air d'admission ;
dans une vue de côté du véhicule (1), la collerette arrière (33) chevauche une prolongation ou une extrapolation (L1) du premier élément d'engagement (61) s'étendant dans un sens axial du premier élément d'engagement (61) ; et
lorsque vue le long du sens axial du premier élément d'engagement (61), la collerette arrière (33) ne chevauche pas le premier élément d'engagement (61), dans lequel
la rainure (471) constitue un conduit de flux auxiliaire (49) ; et
le conduit de flux auxiliaire (49) contourne depuis un côté en amont un corps de valve (44) vers un côté en aval du corps de valve (44).

2. Véhicule de type à califourchon ou à enfourcher (1) selon la revendication 1, comprenant en outre un second élément d'engagement (62) engageant le cylindre (13) et la collerette avant (32), et dans lequel
le premier élément d'engagement (61) et le second élément d'engagement (62) sont disposés à des positions mutuellement différentes autour d'une direction circonférentielle de l'élément de tuyau (24) ;
dans une vue de côté du véhicule (1), la collerette arrière (33) chevauche une prolongation ou une extrapolation (L2) du second élément d'engagement (62) s'étendant dans un sens axial du second élément d'engagement (62) ; et
telle que vue le long du sens axial du second élément d'engagement (62), la collerette arrière (33) ne chevauche pas le second élément d'engagement (62).

3. Véhicule de type à califourchon ou à enfourcher (1) selon la revendication 2, dans lequel :
le premier élément d'engagement (61) est disposé au-dessus et en outre vers un premier côté latéral, qui est l'un parmi le côté gauche et droit, d'un axe central de l'élément de tuyau (24) ; et
le second élément d'engagement (62) est disposé en-dessous et en outre vers un second côté latéral qui est à l'opposé du premier côté latéral de l'axe central de l'élément de tuyau (24).

4. Véhicule de type à califourchon ou à enfourcher (1) selon la revendication 2 ou la revendication 3, comprenant en outre un troisième élément d'engagement (63) et un quatrième élément d'engagement (64) qui engagent le corps de papillon (23) et la collerette arrière (33), et dans lequel :
la collerette arrière (33) inclut un premier trou de collerette arrière (334) et un second trou de collerette arrière (335) ;
le troisième élément d'engagement (63) passe à travers le premier trou de collerette arrière (334) ;
le quatrième élément d'engagement (64) passe à travers le second trou de collerette arrière (335) ;
le premier trou de collerette arrière (334) et le second trou de collerette arrière (335) sont disposés à des positions mutuellement différentes autour de la direction circonférentielle de l'élément de tuyau (24) ;
tels que vus le long du sens axial du premier élément d'engagement (61), le premier trou de collerette arrière (334) et le second trou de collerette arrière (225) ne chevauchent pas le premier élément d'engagement (61) ; et
tels que vus le long du sens axial du second élément d'engagement (62), le premier trou de collerette arrière (334) et le second trou de collerette arrière (335) ne chevauchent pas le second élément d'engagement (62).

5. Véhicule de type à califourchon ou à enfourcher (1) selon la revendication 4, dans lequel
le premier élément d'engagement (61) est disposé au-dessus et en outre vers un premier côté latéral, qui est l'un parmi le côté gauche et droit, de l'axe central de l'élément de tuyau (24) ;
le second élément d'engagement (62) est disposé en-dessous et en outre vers un second côté latéral, qui est à l'opposé du premier côté latéral, de l'axe central de l'élément de tuyau (24) ;
le premier trou de collerette arrière (334) est disposé au-dessus et en outre vers le second côté latéral de l'axe central de l'élément de tuyau (24) ; et
le second trou de collerette arrière (335) est disposé en-dessous et en outre vers le premier côté latéral de par rapport à l'axe central de l'élément de tuyau (24).

6. Véhicule de type à califourchon ou à enfourcher (1) selon l'une quelconque des revendications précédentes, comprenant en outre un dispositif d'injection d'essence (25) configuré pour injecter de l'essence vers l'admission d'air, et dans lequel
l'élément de tuyau (24) inclut une partie de fixation de dispositif d'injection d'essence (34) à laquelle le dispositif d'injection d'essence (25) est fixé ; et
dans une vue le long du sens axial du premier élément d'engagement (61), au moins une partie de la rainure (471) et au moins une partie de la partie de fixation de dispositif d'injection d'essence (34) se chevauchent.

7. Véhicule de type à califourchon ou à enfourcher (1) selon l'une quelconque des revendications précédentes, comprenant en outre :
un purificateur d'air (21) disposé à l'arrière du cylindre (13) ; et
une partie de tuyau de raccord (22) raccordant le corps de papillon (23) et le purificateur d'air (21) ; et dans lequel
une longueur d'un axe central de l'élément de tuyau (24) est plus courte qu'une somme ou une longueur totale d'un axe central de la partie de tuyau de raccord (22) et une longueur d'un axe central du corps de papillon (23).

8. Véhicule de type à califourchon ou à enfourcher (1) selon l'une quelconque des revendications précédentes, dans lequel, dans une vue le long du sens axial du premier élément d'engagement (61), la collerette arrière (33) inclut une partie concave (337) concave de manière à ne pas chevaucher le premier élément d'engagement (61).
